# EUROPEAN PATENT SPECIFICATION

(11) **EP 2 870 117 B1**
(45) Date of publication and mention of the grant of the patent: **28.11.2018**
(21) Application number: 13734752.2
(22) Date of filing: 05.07.2013
(51) Int. Cl.: C04B 28/04, C04B 14/12, C04B 14/16, C04B 111/40

(54) **LIGHTWEIGHT CONCRETE WITH LOW THERMAL CONDUCTIVITY**
LEICHTBETON MIT NIEDRIGER WÄRMELEITFÄHIGKEIT
BÉTON LÉGER AYANT UNE FAIBLE CONDUCTIVITÉ THERMIQUE

(30) Priority: 06.07.2012 FR 1256535
(43) Date of publication of application: 13.05.2015
(73) Proprietor: Holcim Technology Ltd, 8645 Jona (CH)
(72) Inventor: BERNARDI, Sébastien, F-38291 Saint Quentin Fallavier (FR); FERREIRA, Laurent, F-38291 Saint Quentin Fallavier (FR); MESSAD, Samir, F-38291 Saint Quentin Fallavier (FR); VACHOT, Philippe, F-69340 Francheville (FR)
(74) Representative: Regimbeau
(86) International application number: PCT/EP2013/064289
(87) International publication number: WO 2014/006194

(56) References cited:
- EP-A2- 2 364 962
- WO-A1-2011/061383
- FR-A1- 2 922 205
- FR-A1- 2 929 270
- FR-A1- 2 971 801
- "AG0/4-500 Argile expansée", ARGEX NV: Fiche Technique, January 2012 (2012-01), page 1, XP055058767, Belgique Retrieved from the Internet: URL:http://www.argex.eu/download.php?lang= fr&id=9 [retrieved on 2013-04-08]
- "AG 4/8-320 Argile expansée", ARGEX NV Fiche Technique, January 2012 (2012-01), page 1, XP055058768, Retrieved from the Internet: URL:http://www.argex.eu/download.php?lang= fr&id=12 [retrieved on 2013-04-08]

## Description

The present invention relates to a lightweight concrete with low thermal conductivity, as well as to a process for preparation and to uses of such a concrete. Such concretes may be intended to build structures cast on site, pre-cast structures or elements of pre-cast structures for buildings and civil engineering structures.

It is highly desirable to reduce thermal conductivity in concretes since this makes it possible to increase the energetic efficiency of buildings. For example, it makes it possible to reduce thermal bridges, in particular in buildings of several stories with indoor thermal insulation. Furthermore, the reduction of thermal conductivity in concretes makes it possible to reduce the energy consumption required to air condition the buildings.

However, a reduction of thermal conductivity in concretes is usually obtained by reducing the density of the concretes. This reduction of density results in a loss of strength for the concretes, which tends to restrict their use as structural concrete. Various concrete formulations having reduced thermal conductivity have been proposed.

Document FR 2922 205 A discloses a loadbearing lightweight insulating concrete comprising a hydraulic binder, sand and coarse aggregates. This concrete has a thermal conductivity at 23°C and 50% relative humidity (RH) of less than 0.65 W/m.K.

Therefore, the problem which the invention intends to solve is to provide a new formulation of lightweight structural concretes making it possible to associate compressive strength and low thermal conductivity, the compressive strength having to be sufficient to make it possible to use this concrete in load-bearing structures of construction work.

Surprisingly, the inventors have shown that it is possible to use aggregates having selected sizes and densities to obtain low thermal conductivity whilst keeping effective mechanical strengths.

With this aim, the invention provides a concrete comprising at least one cement, effective water, aggregates, optionally admixtures and optionally additions.

The concretes according to the present invention have one or more of the following characteristics:
- advantageously the concrete according to the invention has thermal conductivity at 23°C and 50% relative humidity less than 0.35 W/(m.K);
- advantageously the concrete according to the invention has a compressive strength of 12 Mpa 28 days after mixing, measured on 15cm x 30cm cylinders or has a compressive strength of 15 Mpa 28 days after mixing, measured on 15cm x 15cm cubes, according to the European NF EN 206-1 Standard of October 2005 and the European NF EN 12390-3 Standard of February 2003;
- advantageously the concrete according to the invention has a density of the hardened concrete in the dry state less than 1250 kg/m³, preferably less than 1200 kg/m³.

A load-bearing structure generally comprises all the elements of a structure bearing more than their own weight. By way of example of an element, which may be load-bearing, mention may be made of posts, floors, walls, beams, lintels.

The present invention relates to a concrete comprising:
- cement;
- effective water;
- aggregates (G1) having a maximum size of 16 mm and a real density (ρ₁) of 470 to 1000 kg/m³;
- aggregates (G2) having a maximum size of 4 mm and a real density (ρ₂), such, that the real density (p) of the mixture (G1) + (G2) is comprised from 600 to 900 kg/m³ with 1/ρ = m1/ (ρ₁) + m2/ (ρ₂) m1 and m2 respectively being the mass fractions of (G1) and (G2);
said concrete having a density in the fresh state of 800 to 1500 kg/m³, advantageously less than or equal to 1400 kg/m³,
said concrete in the fresh state having a W_{effective}/ B_{eq} ratio in the fresh state varying from 0.19 to 0.60,
wherein W_{effective} represents the quantity of effective water in kilograms per cubic metre of fresh concrete;
wherein B_{eq} represents the quantity of cement and optionally of additions, expressed in binder equivalent, in kilograms per cubic metre of fresh concrete;
said concrete comprising a quantity of effective water varying from 100 to 320 litres per cubic metre of fresh concrete;
said concrete comprising a quantity of cement and optionally of additions greater than or equal to 200 kilograms per cubic metre of fresh concrete;
and said concrete in the fresh state having a volume of paste greater than or equal to 300 l/m³ of fresh concrete;
and said concrete in the fresh state having a volume of air of 1 to 16 %.

A hydraulic binder is a material which sets and hardens by hydration. Preferably, the hydraulic binder is a cement.

A hydraulic binder used according to the invention may comprise cement and optionally additions.

The suitable cement for the concrete according to the invention is preferably the cement described according to the European NF EN 197-1 Standard of February 2001. The suitable cement for the concrete according to the invention may of type CEM I, CEM II, CEM III, CEM IV or CEM V.

Preferably, the cement used according to the invention is selected from the cement types:
- CEM III, CEM IV or CEM V, or
- CEM I or CEM II, optionally mixed with additions.

The preferred cement according to the invention is the CEM III cement, by itself or mixed with additions or other cements, for example those described according to the European NF EN 197-1 Standard of February 2001.

Another suitable cement for the concrete according to the invention is calcium aluminate cement. It is generally a cement comprising a C₄A₃$, CA, C₁₂A₇, C₃A or C₁₁A₇CaF₂ mineralogical phase or mixtures thereof, for example Fondu® cements, sulfoaluminous cements, calcium aluminate cements conforming with the NF EN 14647 Standard of December 2006, the cement obtained from the clinker described in patent application WO 2006/018569 or mixtures thereof.

According to a variant, the concrete according to the invention comprises a cement of type CEM I or CEM II, mixed with additions of slag and/or fly ash and/or silica fume and/or pozzolanic materials and/or metakaolins.

The quantity of cement, and optionally additions may be expressed by binder equivalent in kilograms per cubic metre of fresh concrete according to the NF EN 206-1 Standard of October 2005.

The additions are generally materials which can be used to partially substitute the cement. The additions used according to the invention may be pozzolanic materials (for example as defined in the European NF EN 197-1 Standard of February 2001, paragraph 5.2.3), silica fume (for example, as defined in the European NF EN 197-1 Standard of February 2001, paragraph 5.2.7), slags (for example, as defined in the European NF EN 197-1 Standard of February 2001, paragraph 5.2.2), calcined shale (for example as defined in the European NF EN 197-1 Standard of February 2001, paragraph 5.2.5), materials containing calcium carbonate, for example limestone (for example, as defined in the European NF EN 197-1 Standard paragraph 5.2.6), siliceous additions (for example, as defined in the French NF P 18-509 Standard of December 1998, paragraph 5), fly ash (for example, as described in the European NF EN 197-1 Standard of February 2001, paragraph 5.2.4), metakaolins or mixtures thereof.

Fly ash is generally pulverulent particles comprised in fume from thermal power plants which are fed with coal. Fly ash is generally recovered by electrostatic or mechanical precipitation.

The chemical composition of a fly ash mainly depends on the chemical composition of the unburned carbon and on the process used in the thermal power plant where it came from. Its mineralogical composition also depends on the same factors. The fly ash used according to the invention may have a siliceous or calcic nature.

Preferably, the fly ash used according to the present invention is selected from those described in the European NF EN 197-1 Standard of February 2001.

Slags are generally obtained by rapid cooling of molten slag resulting from melting of iron ore in a blast furnace.

The slags used according to the present invention may be selected from granulated blast-furnace slags according to the EN 197-1 Standard of February 2001, paragraph 5.2.2.

Silica fume used according to the present invention may be a material obtained by the reduction of very pure quartz by the coal in electric arc furnaces used for the production of silicon and alloys of ferrosilicon. Silica fume is generally formed of spherical particles comprising at least 85% by mass of amorphous silica.

Preferably, the silica fume used according to the present invention may be selected from silica fume according to the European NF EN 197-1 Standard of February 2001, paragraph 5.2.7.

The pozzolanic materials used according to the present invention may be natural siliceous and/or silico-aluminous substances or a combination thereof. Among the pozzolanic materials, natural pozzolans may be mentioned, which are generally materials of volcanic origin or sedimentary rocks, and natural calcined pozzolans, which are materials of volcanic origin, clays, shale or thermally-activated sedimentary rocks. The pozzolanic materials used according to the present invention may be selected from pumice, tuff, scoriae or mixtures thereof.

Preferably, the pozzolanic materials used according to the present invention may be selected from the pozzolanic materials according to the European NF EN 197-1 Standard of February 2001 paragraph 5.2.3.

The metakaolins may be the result of calcination of a clay, kaolinite, associated to different minerals (phyllosilicates, quartz, iron oxides) in variable proportions depending on the deposits. They may be obtained either by calcination followed by grinding or by grinding followed by calcination in production units with rotating kilns, plateaux or for example, by calcination called « flash » calcination. They are essentially composed of particles of amorphous alumina silicate.

Preferably, the metakaolins used according to the present invention may be selected from the metakaolins according to the preliminary project of the PR NF P 18-513 Standard of December 2011.

Preferably, the additions used according to the invention may be slags and/or fly ash and/or silica fume. Preferably, the additions used according to the invention are slags.

The aggregates are generally mineral materials, but may also be materials of vegetable origin or recycled materials.

Natural or artificial aggregates can be found among the mineral aggregates.

The natural aggregates of mineral origin generally have not been submitted to any transformation other than mechanical transformation and generally come from volcanic rocks. These natural aggregates are, for example, pozzolans (pumice) or silicates (vermiculite or perlite).

The artificial aggregates of mineral origin result from an industrial process comprising thermal or other modifications. These artificial aggregates are, for example, clays (expanded clays), shale (expanded shale, expanded slate) or silicates (expanded vermiculite or expanded perlite) or aggregates of expanded glass.

The calcined shale used according to the present invention may be a material produced in a special kiln at an approximate temperature of 800°C mainly comprising dicalcium silicate and monocalcium aluminate (see the EN 197-1 Standard, paragraph 5.2.5).

The clays used according to the present invention may be phyllosilicates. The clays according to the invention may be selected from kaolinite, smectites (general term used to designate swelling clays, including montmorillonite), illite, muscovite, chlorites, or mixtures thereof.

The calcined clays used according to the present invention may be clays which have been submitted to thermal treatment.

The aggregates of vegetable origin are natural porous lignocellulosic composites and are rich in organic materials (cellulose, hemicelluloses, lignin), coming from plants via industrial production processes (e.g. grinding).

Examples of aggregates with a vegetable origin are aggregates of hemp chaff (hemp), maize cob, sorghum, flax shives, miscanthus (elephant grass) rice hulls, sugarcane bagasse, wood chips (for example spruce).

Examples of aggregates obtained from recycled materials are, among others, aggregates coming from concrete recycling, alternative aggregates coming from the recycling of plastic, for example, aggregates produced from electronic or electric equipment waste.

The aggregates used according to the present invention may be plastic aggregates.

The aggregates used according to the present invention may be lightweight aggregates, in particular as defined in the NF EN 13055-1 Standard of December 2002.

The aggregates used according to the present invention may be treated aggregates with different types of materials and via different processes in order to reduce their water-absorption capacity. Furthermore, partially or totally pre-water-saturated aggregates may be mentioned, by an immersion carried out 24 hours before the said saturated aggregates are used.

For example, the treated aggregates may have been mixed with a compound or sprayed with a compound which confers upon them a particular property. For example, the treatment can make the aggregates more water-repellent or can reduce their water-absorption capacity. A treated aggregate according to the invention can be:
- impregnated with a pure resin (based on alcane, asphalt, polyethylene vinyl acetate, silane, siloxane or epoxy); or
- impregnated by immersion or spraying of an emulsion of the resins mentioned above; or
- impregnated with a solution which gels over time, for example an inorganic gel (sodium silicate, aluminium hydroxide, iron hydroxide, magnesium hydroxide, or calcium carbonate gel), an organic gel (cellulose acetate, nitro-cellulose or alcohol mixed with sodium oleate), or a natural organic gel (polysaccharide, including dextran or agar, casein or gelled oils).

The aggregates may be characterised by their real density, determined after drying in a drying oven. The real density, determined after drying in a drying oven is the ratio between the mass of the sample dried in a drying oven and the volume it occupies in water, including the closed pores and those accessible to water according to the European NF EN 1097-6 Standard of June 2001 paragraph 3.2. For simplifications purposes, the real density, determined after drying in the drying oven, is called real density (p) in the entire description and the accompanying claims.

The concrete according to the invention comprises aggregates (G1) having a maximum size of 16 mm and a real density (ρ₁) comprised from 470 to 1000 kg/m³.

Preferably, the concrete according to the invention comprises aggregates (G1) having a maximum size of 16 mm and a real density comprised from 500 to 900 kg/m³.

Preferably, the concrete according to the invention comprises aggregates (G1) having a maximum size of 10 mm and a real density comprised from 600 to 900 kg/m³.

The concrete according to the invention further comprises aggregates (G2) having a maximum dimension of 4 mm and a real density (ρ₂), such, that the real density (p) of the mixture (G1) + (G2) is from 600 to 900 kg/m³ with 1/ρ = m1/ (ρ₁) + m2/ (ρ₂) m1 and m2 respectively being the mass fractions of (G1) and (G2), preferably comprised from 600 to 900 kg/m³. The mass fractions are the mass proportions of each of the aggregates in the total mixture of aggregates.

According to a variant, aggregates (G1) and aggregates (G2) are materials of same origin.

According to a variant, the concrete comprises at least one type of treated aggregates. According to another variant, all the aggregates used according to the present invention are treated aggregates.

Preferably, the concrete according to the invention comprises a quantity of aggregates less than or equal to 700 litres per cubic metre of fresh concrete.

The effective water is the water required to hydrate a hydraulic binder and to provide the fluidity of a hydraulic composition obtained in the fresh state. The total water represents the totality of the water present in the mix (at the time of the mixing) and comprises the effective water and the water absorbed by the aggregates. The water retained by the aggregates is not taken into account in the effective water because it does not participate in the hydration of the hydraulic binder. Effective water and its calculation are described in the European NF EN 206-1 Standard of October 2005.

The quantity of absorbable water by the aggregates is deduced from the coefficient of absorption of the aggregates measured according to the European NF EN 1097-6 Standard of June 2001. The absorption coefficient of water is the ratio of the increase in mass of a sample of aggregates, initially dry, then submerged during 24 hours in water, relative to its dry mass. The increase of the mass is due to the water penetrating in the pores of the water-accessible aggregates.

The concrete according to the invention may, for example comprise one of the admixtures described in the European NF EN 934-2 Standard of September 2002, the European NF EN 934-3 Standard of November 2009 or the European NF EN 934-4 Standard of August 2009. Advantageously, the hydraulic composition according to the invention comprises an admixture for a hydraulic composition. Such an admixture may be one or more of the following admixtures: an accelerator, an air-entraining agent, a viscosity-modifying agent, a retarder, a clay-inerting agent, an anti-foaming agent, a plasticizer, a superplasticizer, etc. In particular, it is useful to use a superplasticizer of the polycarboxylate type, in particular from 0.05 to 1.5 %, preferably from 0.1 to 0.8 %, by mass of the binder.

Clay inerting agents are compounds which permit the reduction or prevention of the harmful effect of clays on the properties of hydraulic binders. Clay inerting agents include those described in WO 2006/032785 and WO 2006/032786.

According to a variant, the concrete according to the invention comprises a superplasticizer.

The term superplasticizer as used in this description and the accompanying claims is to be understood as including both water reducers and superplasticizers as described in the Concrete Admixtures Handbook, Properties Science and Technology, V.S. Ramachandran, Noyes Publications, 1984.

A water reducer is defined as an admixture which reduces the amount of mixing water of a concrete for a given workability by typically 10-15%. Water reducers include for example, lignosulphonates, hydroxycarboxylic acids, glucides and other specific organic compounds, for example glycerol, polyvinyl alcohol, sodium alumino-methyl-siliconate, sulfanilic acid and casein.

Superplasticizers belong to a new class of water reducers which are chemically different to older water reducers and are capable of reducing water contents by approximately 30% by mass. The superplasticizers have been broadly classified into four groups: sulphonated naphthalene formaldehyde condensate (SNF) (generally a sodium salt); sulphonated melamine formaldehyde condensate (SMF); modified lignosulfonates (MLS); and others. More recent superplasticizers include polycarboxylic compounds such as polycarboxylates, e.g. polyacrylates. A superplasticizer is preferably a new generation superplasticizer, for example a copolymer containing polyethylene glycol as graft chain and carboxylic functions in the main chain such as a polycarboxylic ether. It may be a PCP with a differed effect. Sodium polycarboxylate-polysulphonates and sodium polyacrylates may also be used. Phosphonic acid derivatives may also be used. The amount of superplasticizer required generally depends on the reactivity of the cement. The lower the reactivity, the lower the amount of superplasticizer required.

The concrete according to the invention may be a ready-mix concrete, a projected concrete, a concrete pre-cast on the jobsite, or a concrete produced in a production plant of pre-cast elements. Preferably, the concrete according to the invention is a ready-mix concrete. Ready-mix concrete is generally a concrete having sufficient open workabililty time to allow for the transport of the concrete to the jobsite where it will be poured. Upon delivery, the ready-mix concrete should generally be in a consistency class of at least S3 according to the European NF EN 206-1 Standard of October 2005. Preferably, the open workabililty time of ready-mix concretes can be at least 1h30.

To obtain and control the proportion of desired air in the concrete according to the invention, it is possible to add one or more air-entraining admixtures. These admixtures are commonly used in the field of concretes and may, for example, be selected from the group of ionic or non-ionic surfactants, for example oleates, sulfonates and carboxylates. The quantity of admixture may be adjusted in order to obtain a target spread upon delivery of the ready-mix concrete.

The concrete according to the invention may comprise in the fresh state from 1 to 16 % of air, % by volume.

Preferably, the concrete according to the invention may comprise in the fresh state 1 % to 14 % of air, % by volume.

Preferably, the concrete according to the invention may comprise in the fresh state 2 % to 12 % of air, % by volume.

Preferably, the concrete according to the invention may comprise in the fresh state 3 % to 10 % of air, % by volume.

The concrete according to the invention in the fresh state has a volume of paste greater than or equal to 300 l/m³ of fresh concrete.

The volume of paste is generally the volume of cement, optionally of additions, effective water, air and admixtures.

The formulations of concretes according to the invention associate a sufficiently high compressive strength to ensure their structural role with reduced thermal conductivity compared to that of typically-available concretes in the field. Moreover, these formulations are simple and easy to use. Finally, the materials used are relatively inexpensive and easily available. This makes these formulations particularly useful in the industry.

Preferably, the concrete according to the invention has thermal conductivity at 23°C and 50% RH less than 0.35 W/m.K, preferably less than 0.30 W/m.K, and even more preferably less than 0.20 W/m.K.

Thermal conductivity (also called lambda (λ)) is a physical value characterising the behaviour of materials during heat transfers by conduction. Thermal conductivity represents the quantity of heat transferred per surface unit and per time unit for a temperature gradient. In the international system of units, thermal conductivity is given in watts per metre per Kelvin, (W·m⁻¹·K⁻¹). Conventional concretes have thermal conductivity from 1.3 to 2.1 at 23°C and 50 % relative humidity. Conventional lightweight structural concretes have thermal conductivities generally greater than 0.8 W/m.K at 23°C and 50 % relative humidity.

Thermal conductivity is to be understood according to the invention as thermal conductivity at 23°C and 50% RH, determined according to the following procedure:
- measurement of dry thermal conductivity according to the guarded hot plate method according to the ISO 8302 Standard of August 1991, after complete drying of the sample
- determination of thermal conductivity from values measured in reference temperature and humidity conditions, given for a determined fractile and confidence level and corresponding to a usage time considered to be reasonable in standard conditions, according to the European NF EN ISO 10456 Standard of June 2008.

The invention also relates to a process for production of a concrete according to the invention, which comprises a step of mixing water and a cement, aggregates, optionally an inorganic material other than a clinker, and optionally admixtures in such quantities as described herein above for the concrete according to the invention.

The invention also relates to a process for preparation of a concrete according to the invention, this process comprising the mixing of:
- cement;
- effective water;
- aggregates (G1) having a maximum size of 16 mm and a real density (ρ₁) of 470 to 1000 kg/m³;
- optionally aggregates (G2) having a maximum size of 4 mm and a real density (ρ₂), such, that the real density (p) of the mixture (G1) + (G2) is comprised from 600 to 900 kg/m³ with 1/p = m1/ (ρ₁) + m2/ (ρ₂) m1 and m2 respectively being the mass fractions of (G1) and (G2);
said concrete having a density in the fresh state of 800 to 1500 kg/m³, advantageously less than or equal to 1400 kg/m³,
said concrete in the fresh state having a W_{effective}/ B_{eq} ratio in the fresh state varying from 0.19 to 0.60,
wherein W_{effective} represents the quantity of effective water in kilograms per cubic metre of fresh concrete;
wherein B_{eq} represents the quantity of cement and optionally of additions, expressed in binder equivalent, in kilograms per cubic metre of fresh concrete;
said concrete comprising a quantity of effective water varying from 100 to 320 litres per cubic metre of fresh concrete;
said concrete comprising a quantity of cement and optionally of additions greater than or equal to 200 kilograms per cubic metre of fresh concrete;
and said concrete in the fresh state having a volume of paste greater than or equal to 300 l/m³ of fresh concrete;
and said concrete in the fresh state having a volume of air of 1 to 16 %.

The mixing may be carried out, for example by known methods.

According to an embodiment of the invention, the hydraulic binder is prepared during a first step, and the aggregates and water are added during a second step.

According to another embodiment of the process according to the present invention, it is possible to add each of the elements mentioned herein above separately.

The concrete according to the present invention may be cast to produce, after hydration and hardening, an object cast for the construction field. The invention also relates to such a cast object which comprises the concrete as described herein above. The objects cast for the construction field include, for example, a slab, a floor, a screed, a foundation, a wall, a partition wall, a ceiling, a beam, a work top, a pillar, a bridge pier, a block of concrete, optionally foamed concrete, a pipe, a conduit, a post, a stair, a panel, a cornice, a mould, a road system component (for example a border of a pavement), a roof tile, a surfacing (for example of a road or a wall), an insulating component (acoustic and/or thermal).

In the present description, including the accompanying claims, unless otherwise specified, percentages are by mass.

The invention also relates to the use of a concrete according to the invention as construction material.

The invention also relates to a concrete object according to the invention.

The following examples are provided for the invention purely for illustrative and non-limiting purposes.

### Examples of embodiments of the invention

### Determination of the content of effective water:

The content of effective water in a concrete is the difference between the quantity of total water contained in one cubic metre of fresh concrete and the quantity of water which can be absorbed by the aggregates. The quantity of water which can be absorbed by the aggregates was determined by multiplying the absorption coefficient of water of the aggregates by the mass of dry aggregates in one cubic metre of fresh concrete. The absorption coefficient of water of the aggregates was obtained according to the method described in Appendix C of the European NF EN 1097-6 Standard of June 2001. This method is valid for the aggregates with sizes varying from 4 to 31.5 mm. For aggregates with sizes less than 4 mm, the method described in the European NF EN 1097-6 Standard of June 2001 paragraph 9 should be used.

### Determination of the density in the fresh state:

The density of the fresh concrete was determined according to the European NF EN 12350-6 Standard of December 1999.

### Determination of the density of the hardened concrete in the dry state:

The density of the hardened concrete in the dry state was determined according to the European NF EN 12390-7 of September 2001.

### Determination of the air content in the concrete

The air content of the concretes was determined according to the ASTM C173 Standard of November 2001.

### Determination of the compressive strength:

Measurements of compressive strength were carried out on cylinders (diameter: 11 cm and height: 22 cm) according to the European NF EN 12390-3 Standard of February 2003.

### List of the raw materials:

The CEM III/A 52.5 cement is blast furnace cement with a density of 2960 kg/m³. This cement is the CEM III type and has the 52.5 strength class coming from the Lafarge plant of Le Havre.

The CEM I 52.5 cement is Portland cement with a density of 3150 kg/m³. This cement is the CEM I type and has the 52.5 strength class. It comes from the Lafarge plant of Le Havre.

The blast furnace slag is slag produced by Mittal-Arcelor at Fos Sur Mer. The density of this slag is 2950 kg/m³, the Blaine specific surface is 3258 cm²/g.

The sand of expanded clay has a real density of 840 kg/m³, a maximum size of 2 mm and water absorption of 1% by mass at 1 hour. It comes from the Laterlite company (Italy).

The coarse aggregates of expanded clay have a maximum size of 8 mm, a real density of 550 kg/m³ and water absorption of 1% by mass at 1 hour. They come from the Laterlite company (Italy).

The pumice sand has a real density of 930 kg/m³, a maximum size of 4 mm and water absorption of 10% by mass at 1 hour. The pumice sand comes from the Ecoponce S.A.M company.

The pumice coarse aggregates have a maximum size of 16 mm, a real density of 640 kg/m³ and water absorption of 12% by mass at 1 hour. The pumice aggregates come from the Ecoponce S.A.M company.

The plastic aggregates have a maximum size of 10 mm, a real density of 1180 kg/m³ and water absorption of 1% by mass at 1 hour. The sand and coarse aggregates come from the Veolia Environnement company (France).

The superplasticizer is of the family of polycarboxylate polyoxides (PCP), it is GLENIUM 27 from BASF company.

The plasticizer has a base of lignosulfonates. It is pozzolith 391N from BASF company.

The air-entraining agent has a base of sodium oleate. It is Microair 104 from BASF company.

The anti-foaming agent has a base of an ester of fatty acid. It is Clerol from BASF company.

The water is tap water.

### Process for production of the concrete:

The process for production is the process used for standard lightweight concretes.

The raw materials in the examples were introduced in a standard 30-litre mixer with a planetary movement, reference: ZYKLOS ZK30 from the Pemat Mischtechnik GmbH company.

A preliminary step of pre-wetting the aggregates was carried out during which step these aggregates were mixed for two minutes with the pre-wetting water, then were left to rest for a certain period of time varying from 1 to 24 hours. Then the following steps were carried out:
- Introduce the aggregates into the mixer
- Mix for 1 minute
- Stop mixing
- Introduce the cement, and optionally additions, into the mixer in 30 seconds
- Resume the mixing for 1 minute
- Introduce the mixing water (total water) into the mixer in 30 seconds, whilst continuing to mix
- Mix for 1 minute.

A fresh concrete was obtained and poured into moulds with a cylinder shape (diameter: 11 cm and height: 22 cm).

The cylinders (called specimens) of concrete were made in three layers, and the concrete was poured using a tamping rod according to the European NF EN 12390-2 Standard of October 2001, paragraph 5.2.3. After filling the moulds, these specimens were kept according to the method described in paragraph 5.5 of the European NF EN 12390-Standard of October 2001.

The properties of the concrete thus obtained were determined using the European NF EN 12390-3 Standard of February 2003, the European NF EN 206-1 Standard of October 2005, the ISO 3806 and the European NF EN ISO 10456 Standard of June 2008.

The concrete according to the invention is exemplified in the embodiments described herein below.

### Example 1: Concrete according to the invention comprising expanded clay

| **Raw Materials** | **Masses and volumes for 1 m³ of fresh concrete** | **% by mass** |
|---|---|---|
| CEM III/A 52.5 Cement | 589 kg | 51.4% |
| Total water | 202 l | 17.6% |
| ... *(including the effective water)* | *198 l* | 17.3% |
| Air | 70 l i.e. 7% by volume | |
| Coarse aggregates of expanded clay (G1) | 158 kg | 13.8% |
| Sand of expanded clay (G2) | 196 kg | 17.1% |
| Superplasticizer | 3 l | 0.26% |
| Plasticizer | 1.5 l | 0.13% |
| Air-entraining agent | 0.6 l | 0.026% |
| Volume of paste | 467 l | |

### Properties of the obtained concrete:

| | |
|---|---|
| W_{effective}/B_{eq} ratio in the fresh state: | 0.34 |
| Density in the fresh state: | 1140 kg/m³ |
| Density of the hardened concrete in the dry state: | 1040 kg/m³ |
| 28-day compressive mechanical strength on a cylinder: | 22.1 MPa |
| Thermal conductivity at 23°C and 50% RH: | 0.30 W/(m.K) |

### Example 2: Concrete according to the invention comprising pumice:

| **Raw Materials** | **Masses and volumes for 1 m³ of fresh concrete** | **% by mass** |
|---|---|---|
| CEM III/A 52.5 Cement | 607 kg | 41.3% |
| Total water | 440 l | 29.9% |
| ... *(including the effective water)* | 237 *l* | *16.1%* |
| Air | 20 l i.e. 2% by volume | |
| Pumice sand (G2) | 196 kg | 15.8% |
| Pumice coarse aggregates (G1) | 158 kg | 13% |
| Superplasticizer | 3 l | 0.17% |
| Plasticizer | 1.5 l | 0.09% |
| Anti-foaming agent | 0.6 l | 0.04% |
| Volume of paste | 462 l | |

### Properties of the obtained concrete:

| | |
|---|---|
| W_{effective}/B_{eq} ratio in the fresh state: | 0.39 |
| Density in the fresh state: | 1470 kg/m³ |
| Density of the hardened concrete in the dry state: | 1120 kg/m³ |
| 28-day compressive mechanical strength on a cylinder: | 24.6 MPa |
| Thermal conductivity at 23°C and 50% RH: | 0.31 W/(m.K) |

### Example 3: Concrete not according to the invention comprising plastic aggregates

| **Raw Materials** | **Masses and volumes for 1 m³ of fresh concrete** | **% by mass** |
|---|---|---|
| CEM III/A 52.5 Cement | 503 kg | 40.1% |
| Total water | 200 l | 16% |
| ... *(including the effective water)* | *195 l* | *15.6%)* |
| Air | 110 l i.e. 11% by volume | |
| Plastic aggregates (G1) | 550 kg | 43.9% |
| Superplasticizer | 2.3 l | 0.18% |
| Plasticizer | 1.2 l | 0.1 |
| Air-entraining agent | 0.4 l | 0.03% |
| Volume of paste | 475 l | |

The plastic aggregates constitute the only granular fraction.

### Properties of the obtained concrete:

| | |
|---|---|
| W_{effective}/B_{eq} ratio in the fresh state: | 0.39 |
| Density in the fresh state: | 1260 kg/m³ |
| Density of the hardened concrete in the dry state: | 1240 kg/m³ |
| 28-day compressive mechanical strength on a cylinder: | 17.1 MPa |
| Thermal conductivity at 23°C and 50% RH: | 0.3 W/(m.K) |

### Example 4: Concrete according to the invention comprising aggregates of expanded clay

| **Raw Materials** | **Masses and volumes for 1 m³ of fresh concrete** | **% by mass** |
|---|---|---|
| CEM I 52.5 Cement | 236.4 kg | 24.8% |
| Blast furnace slag | 354.6 kg | 37.1 % |
| Total water | 190 l | 19.9 % |
| ... *(including the effective water)* | *186 l* | *19.5 %)* |
| Air | 90 l i.e. 9% by volume | |
| Sand of expanded clay (G2) | 215 kg | 22.5 % |
| Coarse aggregates of expanded clay (G1) | 195 kg | 20.4 % |
| Superplasticizer | 1.6 l kg | 0.17% |
| Plasticizer | 0.8 l | 0.1% |
| Air-entraining agent | 0.1 l kg | 0.01% |
| Volume of paste | 476 l | |

### Properties of the obtained concrete:

| | |
|---|---|
| W_{effective}/B_{eq} ratio in the fresh state: | 0.33 |
| Density in the fresh state: | 1190 kg/m³ |
| Density of the hardened concrete in the dry state: | 1090 kg/m³ |
| 28-day compressive mechanical strength on a cylinder: | 24.6 MPa |
| Thermal conductivity at 23°C and 50% RH: | 0.32 W/(m.K) |

## Claims

1. A concrete comprising:
- cement;
- effective water;
- aggregates (G1) having a maximum size of 16 mm and a real density (ρ₁) of 470 to 1000 kg/m³;
- aggregates (G2) having a maximum size of 4 mm and a real density (ρ₂), such, that the real density (ρ) of the mixture (G1) + (G2) is comprised from 600 to 900 kg/m³ with 1/p = m1/ (ρ₁) + m2/ (ρ₂) m1 and m2 respectively being the mass fractions of (G1) and (G2); said concrete having a density in the fresh state of 800 to 1500 kg/m³, advantageously less than or equal to 1400 kg/m³,
said concrete in the fresh state having a W_{effective}/ B_{eq} ratio in the fresh state varying from 0.19 to 0.60,
wherein W_{effective} represents the quantity of effective water in kilograms per cubic metre of fresh concrete;
wherein B_{eq} represents the quantity of cement and optionally of additions, expressed in binder equivalent, in kilograms per cubic metre of fresh concrete;
said concrete comprising a quantity of effective water varying from 100 to 320 litres per cubic metre of fresh concrete;
said concrete comprising a quantity of cement and optionally of additions greater than or equal to 200 kilograms per cubic metre of fresh concrete;
and said concrete in the fresh state having a volume of paste greater than or equal to 300 l/m³ of fresh concrete;
and said concrete in the fresh state having a volume of air of 1 to 16 %.

2. The concrete according to claim 1 wherein the aggregates are treated aggregates.

3. The concrete according to claim 1 or claim 2 comprising a superplasticizer.

4. The concrete according to any one of claims 1 to 3, wherein the cement is selected from the cement types:
- CEM III, CEM IV or CEM V, or
- CEM I or CEM II, optionally mixed with additions.

5. The concrete according to claim 4, comprising a cement of type CEM I or CEM II, mixed with additions of slag and/or fly ash and/or silica fume and/or metakaolin.

6. The concrete according to any one of claims 1 to 4, comprising, in the fresh state, 2 % to 12 % of air, by volume.

7. A process for preparation of a concrete according to any one of claims 1 to 6, this process comprising the mixing of:
- cement;
- effective water;
- aggregates (G1) having a maximum size of 16 mm and a real density (ρ₁) of 470 to 1000 kg/m³;
- aggregates (G2) having a maximum size of 4 mm and a real density (ρ₂), such, that the real density (p) of the mixture (G1) + (G2) is comprised from 600 to 900 kg/m³ with 1/p = m1/ (ρ₁) + m2/ (ρ₂) m1 and m2 respectively being the mass fractions of (G1) and (G2);
said concrete having a density in the fresh state of 800 to 1500 kg/m³, advantageously less than or equal to 1400 kg/m³,
said concrete in the fresh state having a W_{effective}/ B_{eq} ratio in the fresh state varying from 0.19 to 0.60,
wherein W_{effective} represents the quantity of effective water in kilograms per cubic metre of fresh concrete;
wherein B_{eq} represents the quantity of cement and optionally of additions, expressed in binder equivalent, in kilograms per cubic metre of fresh concrete;
said concrete comprising a quantity of effective water varying from 100 to 320 litres per cubic metre of fresh concrete;
said concrete comprising a quantity of cement and optionally of additions greater than or equal to 200 kilograms per cubic metre of fresh concrete;
and said concrete in the fresh state having a volume of paste greater than or equal to 300 l/m³ of fresh concrete;
and said concrete in the fresh state having a volume of air of 1 to 16 %.

8. Use of a concrete according to any one of claims 1 to 6 as construction material.

9. A concrete object according to any one of claims 1 to 6.

## Patentansprüche

1. Beton, umfassend:
- Zement;
- Wasser in einer wirksamen Menge;
- Aggregate (G1) mit einer maximalen Größe von 16 mm und einer realen Dichte (ρ₁) von 470 bis 1000 kg/m³;
- Aggregate (G2) mit einer maximalen Größe von 4 mm und einer realen Dichte (ρ₂) derart, dass die reale Dichte (ρ) der Mischung (G1) + (G2) zwischen 600 und 900 kg/m³ inbegriffen ist, wobei 1/p = m1/(ρ₁) + m2/(ρ₂), m1 und m2 jeweils Massenfraktionen von (G1) und (G2) sind; wobei der genannte Beton im frischen Zustand eine Dichte von 800 bis 1500 kg/m³ vorteilhaft weniger als oder gleich 1400 kg/m³, aufweist;
wobei der genannte Beton im frischen Zustand ein Verhältnis W_{efficace}/B_{eq} im frischen Zustand aufweist, das von 0,19 bis 0,60 schwankt;
wobei W_{efficace} die wirksame Menge an Wasser in Kilogramm pro Kubikmeter des frischen Betons darstellt;
in dem B_{eq} die Zementmenge und als Option Zusätze darstellt, die in Bindemitteläquivalenten, in Kilogramm pro Kubikmeter des frischen Betons ausgedrückt sind;
wobei der genannte Beton eine wirksame Menge an Wasser umfasst, die von 100 bis 320 Liter pro Kubikmeter an frischem Beton schwankt;
wobei der genannte Beton eine Zementmenge und als Option Zusätze umfasst, die größer als oder gleich 200 Kilogramm pro Kubikmeter an frischem Beton sind; und
der genannte Beton im frischen Zustand ein Leimvolumen von größer als oder gleich 300 l/m³ an frischem Beton aufweist; und
der genannte Beton im frischen Zustand ein Luftvolumen von 1 bis 16 % aufweist.

2. Beton gemäß Anspruch 1, wobei die Aggregate behandelte Aggregate sind.

3. Beton gemäß Anspruch 1 oder Anspruch 2, umfassend einen Super-Betonverflüssiger.

4. Beton gemäß irgendeinem der Ansprüche 1 bis 3, wobei der Zement ausgewählt ist aus den Zementtypen:
- CEM III, CEM IV oder CEM V, oder
- CEM I oder CEM II, als Option mit Zusätzen vermischt.

5. Beton gemäß Anspruch 4, umfassend einen Zement vom Typ CEM I oder CEM II, der mit Zusätzen aus Schlacke und / oder Flugasche und / oder Silicarauch und / oder Metakaolin vermischt ist.

6. Beton gemäß irgendeinem der Ansprüche 1 bis 4 umfassend im frischen Zustand 2 Vol.-% bis 12 Vol.-% Luft.

7. Verfahren zur Zubereitung eines Betons gemäß irgendeinem der Ansprüche 1 bis 6, wobei dieses Verfahren das Vermischen von:
- Zement;
- Wasser in einer wirksamen Menge;
- Aggregate (G1), die eine maximale Größe von 16 mm und eine reale Dichte (ρ₁) von 470 bis 1000 kg/m³ aufweisen;
- Aggregate (G2), die eine maximale Größe von 4 mm und eine reale Dichte (ρ₂) derart aufweisen, dass die reale Dichte (ρ) der Mischung (G1) + (G2) von 600 bis 900 kg/m³ inbegriffen ist, wobei jeweils 1/ρ = m1/(ρ₁) + m2/(ρ₂), m1 und m2 die Massefraktionen von (G1) und (G2) sind, umfasst;
wobei der genannte Beton im frischen Zustand eine Dichte von 800 bis 1500 kg/m³, vorteilhaft weniger als oder gleich 1400 kg/m³ aufweist;
wobei der genannte Beton im frischen Zustand ein Verhältnis W_{efficace}/B_{eq} im frischen Zustand aufweist, das von 0,19 bis 0,60 schwankt;
wobei W_{efficace} die wirksame Menge an Wasser in Kilogramm pro Kubikmeter des frischen Betons darstellt;
in dem B_{eq} die Zementmenge und als Option Zusätze darstellt, die in Bindemitteläquivalent, in Kilogramm pro Kubikmeter an frischem Beton ausgedrückt sind;
wobei der genannte Beton eine wirksame Menge an Wasser umfasst, die von 100 bis 320 Liter pro Kubikmeter an frischem Beton schwankt;
wobei der genannte Beton eine Zementmenge und als Option Zusätze von mehr als oder gleich 200 Kilogramm pro Kubikmeter an frischem Beton umfasst; und
wobei der genannte Beton im frischen Zustand ein Klebstoffvolumen von größer als oder gleich 300 l/m³ an frischem Beton aufweist; und
wobei der genannte Beton im frischen Zustand ein Luftvolumen von 1 bis 16 % aufweist.

8. Verwendung eines Betons gemäß irgendeinem der Ansprüche 1 bis 6 als Baumaterial.

9. Gegenstand aus Beton gemäß irgendeinem der Ansprüche 1 bis 6.

## Revendications

1. Béton comprenant :
- du ciment ;
- de l'eau selon une quantité efficace ;
- des agrégats (G1) qui présentent une taille maximum de 16 mm et une densité réelle (ρ₁) de 470 à 1000 kg/m³ ;
- des agrégats (G2) qui présentent une taille maximum de 4 mm et une densité réelle (ρ₂) de telle sorte que la densité réelle (ρ) du mélange (G1) + (G2) soit comprise entre 600 et 900 kg/m³ avec 1/ρ = m1/(ρ₁) + m2/(ρ₂), m1 et m2 étant respectivement les fractions massiques de (G1) et de (G2) ;
ledit béton présentant une densité à l'état frais de 800 à 1500 kg/m³, de manière avantageuse inférieure ou égale à 1400 kg/m³ ;
ledit béton à l'état frais présentant un rapport W_{efficace}/B_{eq} à l'état frais qui varie de 0,19 à 0,60 ;
dans lequel W_{efficace} représente la quantité d'eau efficace en kilogrammes par mètre cube de béton frais ;
dans lequel B_{eq} représente la quantité de ciment et en option, d'adjuvants, exprimés en équivalent liant(s), en kilogrammes par mètre cube de béton frais ;
ledit béton comprenant une quantité d'eau efficace qui varie de 100 à 320 litres par mètre cube de béton frais ;
ledit béton comprenant une quantité de ciment et en option, d'adjuvants qui est supérieure ou égale à 200 kilogrammes par mètre cube de béton frais ; et
ledit béton à l'état frais comportant un volume de pâte qui est supérieur ou égal à 300 1/m³ de béton frais ; et
ledit béton à l'état frais comportant un volume d'air de 1 à 16 %.

2. Béton selon la revendication 1, dans lequel les agrégats sont des agrégats traités.

3. Béton selon la revendication 1 ou la revendication 2, comprenant un superplastifiant.

4. Béton selon l'une quelconque des revendications 1 à 3, dans lequel le ciment est sélectionné parmi les types de ciment :
- CEM III, CEM IV ou CEM V ; ou
- CEM I ou CEM II, optionnellement mélangé avec des adjuvants.

5. Béton selon la revendication 4, comprenant un ciment de type CEM I ou CEM II, mélangé avec des adjuvants constitués par des scories et/ou des cendres volantes et/ou de la fumée de silice et/ou du métakaolin.

6. Béton selon l'une quelconque des revendications 1 à 4, comprenant, à l'état frais, de 2 % à 12 % d'air, en volume.

7. Procédé pour la préparation d'un béton selon l'une quelconque des revendications 1 à 6, ce procédé comprenant le mélange :
- de ciment ;
- d'eau selon une quantité efficace ;
- d'agrégats (G1) qui présentent une taille maximum de 16 mm et une densité réelle (ρ₁) de 470 à 1000 kg/m³ ;
- d'agrégats (G2) qui présentent une taille maximum de 4 mm et une densité réelle (ρ₂) de telle sorte que la densité réelle (ρ) du mélange (G1) + (G2) soit comprise entre 600 et 900 kg/m³ avec 1/ρ = m1/(ρ₁) + m2/(ρ₂), m1 et m2 étant respectivement les fractions massiques de (G1) et de (G2) ;
ledit béton présentant une densité à l'état frais de 800 à 1500 kg/m³, de manière avantageuse inférieure ou égale à 1400 kg/m³ ;
ledit béton à l'état frais présentant un rapport W_{efficace}/B_{eq} à l'état frais qui varie de 0,19 à 0,60 ;
dans lequel W_{efficace} représente la quantité d'eau efficace en kilogrammes par mètre cube de béton frais ;
dans lequel B_{eq} représente la quantité de ciment et en option, d'adjuvants, exprimés en équivalent liant(s), en kilogrammes par mètre cube de béton frais ;
ledit béton comprenant une quantité d'eau efficace qui varie de 100 à 320 litres par mètre cube de béton frais ;
ledit béton comprenant une quantité de ciment et en option, d'adjuvants qui est supérieure ou égale à 200 kilogrammes par mètre cube de béton frais ; et
ledit béton à l'état frais comportant un volume de pâte qui est supérieur ou égal à 300 l/m³ de béton frais ; et
ledit béton à l'état frais comportant un volume d'air de 1 à 16 %.

8. Utilisation d'un béton selon l'une quelconque des revendications 1 à 6 en tant que matériau de construction.

9. Objet en béton selon l'une quelconque des revendications 1 à 6.
